# NEW EUROPEAN PATENT SPECIFICATION

(11) **EP 3 245 876 B2**
(45) Date of publication and mention of the opposition decision: **16.11.2022**
(45) Mention of the grant of the patent: 01.05.2019
(21) Application number: 17171242.5
(22) Date of filing: 16.05.2017
(51) Int. Cl.: A23D 7/00

(54) **SPREADABLE FOOD COMPOSITION**
STREICHFÄHIGE LEBENSMITTELZUSAMMENSETZUNG
COMPOSITION ALIMENTAIRE TARTINABLE

(30) Priority: 16.05.2016 IT UA20163474
(43) Date of publication of application: 22.11.2017
(73) Proprietor: Unigra' S.r.l., 48017 Conselice (RA) (IT)
(72) Inventor: MONTEFIORI, Gian Luigi, 48017 Conselice (RA) (IT)
(74) Representative: Casci, Tamara

(56) References cited:
- WO-A1-97/28695
- WO-A1-2014/020114
- US-A1- 2002 114 874
- US-A1- 2004 071 856
- US-A1- 2008 248 186

## Description

### Field of application

The present invention relates in general to the food industry.

In particular, the invention relates to a spreadable food composition. The invention also relates to a process for the production of said food composition.

### Prior art

Spreadable margarines (also called table margarines as opposed to those for industrial use) and spreadable fats have long been available on the market. They represent vegetal alternatives to butter and are normally used in a meal as spreads, for example on bread or croutons, in the preparation of snacks, light meals, breakfasts, etc. and also in the preparation of desserts, cakes, biscuits, or other bakery products or pastries, or as cooking ingredients in the same way as butter, for example in the preparation of dressings, sauces, etc.

Spreadable margarines and fats are generally water-in-oil emulsions produced by the emulsification of a fat phase with an aqueous phase, optionally in the presence of an emulsifier. They are normally spreadable at temperatures ranging from 5 to 25°C and are stored at refrigeration temperatures.

The fat phase normally contains a solid lipid component, also called "hardstock" and a fluid or semi-fluid lipid component. The solid lipid component, for example a mixture of palm fat and coconut oil, usually represents about 15% by weight of the fat phase and mainly consists of saturated fatty acids, such as for example, palmitic acid and lauric acid. The fluid or semi-fluid lipid component, on the other hand, represents about 85% by weight of the fat phase and mainly consists of unsaturated fatty acids.

The ratio between the two lipid components, as also the ratio between their sum and the aqueous phase, in addition to their composition in terms of fatty acids and triglycerides, determines the crystallization characteristics (and therefore their plasticity or spreadability) and the melting characteristics of the margarine obtained.

The aqueous phase normally consists of water and/or other ingredients such as most commonly milk and/or milk derivatives (e.g. whey, buttermilk or cream).

The diffusion of spreadable margarines began about a hundred years ago, as a cheaper alternative (and considered to be healthier at the time) to butter, which contains cholesterol.

As is known, most lipids of a plant origin, in the natural state, are fluid at room temperature and vegetable oils were therefore subjected to hydrogenation to obtain the desired hardstock. This process, which has the purpose of saturating the unsaturated bonds of vegetable oil by reaction with hydrogen, when partial, leads to the formation of some bonds in trans conformation, whereas the natural conformation of fatty acids in plants is cis. US2002114874 A1 relates to edible water-in-oil-emulsion spread of which the fat phase comprises a vegetable hardstock fat, which hardstock fat contains at least 5 wt. % of Allanblackia fat and/or Pentadesma fat.

During the nineties, consumers became aware that the intake of trans fatty acids was associated with cardiovascular diseases and that margarines produced by partial hydrogenation can therefore affect health in a negative way.

The food industry consequently reduced or eliminated partially hydrogenated fats, in the production of margarines, thus increasing the use of palm fat, naturally solid at room temperature as it is rich in saturated fatty acids (about 50%).

Some categories of consumers, however, have in recent years turned their interest towards products free from palm fat, for various reasons relating to health and the environment.

The need is therefore felt for providing a spreadable food composition, particularly margarine-like, which is free from palm or palm kernel fats and which at the same time has optimal organoleptic characteristics.

The technical problem underlying the present invention is therefore to provide a spreadable food composition, in particular a margarine-like spreadable composition, which is substantially free from palm or palm kernel fats and which at the same time has optimal organoleptic characteristics, comparable to those of a conventional vegetable margarine.

A further technical problem at the basis of the present invention is to provide such a spreadable food composition which at the same time has an improved nutritional profile compared to spreadable margarines or similar products of the prior art, in particular having a lower content of trans fatty acids, hydrogenated fatty acids and animal fats, if any, and which has a relatively high ratio of unsaturated fatty acids to saturated fatty acids.

### Summary of the invention

Such a problem has been solved according to the invention by a spreadable food composition as defined in claim 1.

The expression "solid lipid component" (or "hardstock") indicates herein a lipidic substance, in particular a fatty substance, which at 20°C has at least 50% of triglycerides in the solid state (SFC, solid fat content). Said triglycerides appear solid at room temperature (20°C).

The expression "fluid oil(s)" indicates herein lipidic substances which are liquid at room temperature (generally at 20°C).

The term "interesterification" refers herein to the rearrangement process of the fatty acids of the glycerides that constitute a lipidic substance.

The interesterified solid lipid component is preferably obtained through the interesterification of a single fat, wherein said fat is the above fat which has, in weight percent based on the total weight of the fat, at least 25% of stearic acid.

Preferably, the spreadable food composition comprises, in weight percent based on the total weight of the spreadable food composition, from 15 to 80%, more preferably from 37 to 60%, even more preferably from 43 to 55% of fat phase; from 15 to 80%, more preferably from 37 to 60%, even more preferably from 43 to 55% of aqueous phase; and from 0.05 to 5%, more preferably from 0.1 to 3%, even more preferably from 0.5 to 2% of at least one emulsifier.

Preferably, the spreadable food composition is a water-in-oil emulsion.

Preferably, the spreadable food composition is a spreadable margarine-like food composition.

The expression "spreadable margarine-like food composition" refers to a spreadable food composition that has a consistency, a flavour and a use similar to those of a conventional spreadable vegetable margarine.

Preferably, in the fat phase, the weight ratio between the interesterified solid lipid component and the at least one fluid oil is comprised between 1:2 and 1:8, more preferably between 1:3 and 1:5.

The spreadable food composition comprises, in weight percent based on the total weight of the spreadable food composition, from 5 to 15%, more preferably from 7 to 13% of the interesterified solid lipid component.

Preferably, the interesterified solid lipid component has a melting point of 40°C or higher. Preferably, the interesterified solid lipid component has a melting point of 60°C or lower. Preferably, the interesterified solid lipid component has a melting point comprised between 45 and 55°C, more preferably comprised between 47 and 52°C.

Preferably, the interesterified solid lipid component is obtained from the interesterification of a fat having a melting point comprised between 20 and 43°C, more preferably comprised between 22 and 35°C, even more preferably comprised between 25 and 30°C.

The melting point is defined on the basis of the measurement of the flow point, measured by means of capillary flow analysis according to the method NGD C 73-1989, as described in Example 1. The flow point of a fat is the temperature at which the fat rises up the interior of a capillary immersed in water.

Interesterification, in fact, advantageously gives the fat in its natural (or original) state, for example cocoa butter, a higher melting point and a plastic behaviour in line with that of the hardstocks commonly used in the field, and therefore an improved resistance to thermal stress. More specifically, interesterification causes a redistribution (random statistic) of the position of the fatty acids of the starting fat which leads to the formation of a fat having a non-polymorphic crystallization. Polymorphic crystallization is in fact a drawback in the case of a spreadable composition as it leads to an undesired instability of the crystalline structure over time and consequently a lack of consistency of the rheological properties of the product over time (e.g. spreadability). The main expression of undesired effects of said instability can be considered to be the growth of fat crystals that cause an unpleasant and undesired graininess, thus jeopardizing the quality of the product.

In the particular case of the interesterification of fats of the present invention, in particular cocoa butter, it is observed that the interesterification transforms a fat in which the triglycerides are mostly symmetrical (saturated-monosaturated-saturated, for example fatty acids POS, SOS, POP, wherein P=palmitic acid, O=oleic acid and S=stearic acid) into a fat with a higher content of asymmetrical triglycerides.

The interesterified solid lipid component comprises, in weight percent based on the total weight of the interesterified solid lipid component, a content of 20% or lower, preferably from 5 to 20%, more preferably from 10 to 15%, most preferably from 12 to 14% of symmetrical triglycerides.

The expression "symmetrical triglycerides" refers herein to triglycerides in which positions 1 and 3 of the glycerol are occupied by a saturated fatty acid and position 2 of the glycerol (i.e. the central position) is occupied by a monounsaturated fatty acid.

Preferably, the interesterified solid lipid component comprises, in weight percent based on the total weight of the interesterified solid lipid component, from 5 to 12%, more preferably from 5.5 to 10%, even more preferably from 6 to 8% of symmetrical triglycerides wherein positions 1 and 3 of the glycerol are occupied by the same saturated fatty acids.

Preferably, the interesterified solid lipid component is obtained from the interesterification of a fat having, in weight percent based on the total weight of the interesterified solid lipid component, a content of 40% or higher, more preferably from 70 to 95%, even more preferably from 75 to 90%, of symmetrical triglycerides.

Preferably, the interesterified solid lipid component is obtained from the interesterification of a fat having, in weight percent based on the total weight of the interesterified solid lipid component, from 20 to 80%, more preferably from 35 to 55%, even more preferably from 40 to 50% of symmetrical triglycerides wherein positions 1 and 3 of the glycerol are occupied by the same saturated fatty acids.

Preferably, the interesterified solid lipid component is obtained from the interesterification of a fat that has not undergone chemical modifications which alter its content profile of fatty acids.

Preferably, the interesterified solid lipid component is obtained from the interesterification of a fat extracted from a plant that is not the result of genetic engineering techniques aimed at modifying the content profile of fatty acids of the oil with respect to the original plant.

Preferably, the interesterified solid lipid component comprises, in weight percent based on the total weight of the interesterified solid lipid component, from 25 to 60%, more preferably from 30 to 50%, even more preferably from 30 to 45%, most preferably from 32 to 38% of stearic acid.

Preferably, the interesterified solid lipid component has a content of saturated fatty acids, in weight percent based on the total weight of the interesterified solid lipid component, of 80% or lower, more preferably of 70% or lower, even more preferably of 65% or lower.

Preferably, the interesterified solid lipid component has a content of saturated fatty acids, in weight percent based on the total weight of the interesterified solid lipid component, of 45% or higher, more preferably of 55% or higher, even more preferably of 60% or higher.

Preferably, the spreadable food composition has a content of saturated fatty acids, in weight percent based on the total weight of the spreadable food composition, of 25% or lower, more preferably lower than 20%.

Preferably, the interesterified solid lipid component has a weight ratio between saturated fatty acids and unsaturated fatty acids (mono- and polyunsaturated) comprised between 80:20 and 40:60, more preferably comprised between 70:30 and 50:50.

Preferably, the food composition has a weight ratio between saturated fatty acids and unsaturated fatty acids (mono- and polyunsaturated) comprised between 15:85 and 35:65, more preferably comprised between 20:80 and 30:70.

Preferably, the food composition has a weight ratio between the content of stearic acid and the content of palmitic acid comprised between 60:40 and 20:80, more preferably comprised between 50:50 and 30:70, even more preferably comprised between 45:55 and 35:65.

Preferably, the interesterified solid lipid component comprises a content of palmitic acid, in weight percent based on the total weight of the interesterified solid lipid component, of 35% or lower, more preferably comprised between 2 and 30%, even more preferably comprised between 24 and 28%.

Preferably, the interesterified solid lipid component comprises a content of saturated fatty acids with a number of carbon atoms lower than 16, in weight percent based on the total weight of the interesterified solid lipid component, of 1% or lower, more preferably lower than 0.5%.

Preferably, the interesterified solid lipid component comprises a content of saturated fatty acids with a number of carbon atoms higher than 18, in weight percent based on the total weight of the interesterified solid lipid component, of 15% or lower, more preferably comprised between 1 and 10%, even more preferably comprised between 1 and 3%.

Preferably, the interesterified solid lipid component comprises a content of oleic acid, in weight percent based on the total weight of the interesterified solid lipid component, of 25% or higher, more preferably comprised between 30 and 55%, even more preferably comprised between 30 and 35%.

Preferably, the interesterified solid lipid component comprises a content of linoleic acid (C18:2), in weight percent based on the total weight of the interesterified solid lipid component, of 12% or lower, more preferably comprised between 1 and 10%, even more preferably comprised between 2 and 4%.

Preferably, the interesterified solid lipid component preferably comprises a content of linolenic acid (C18:3), in weight percent based on the total weight of the interesterified solid lipid component, of 4% or lower, more preferably of 2% or lower, even more preferably of 0.5% or lower.

Preferably, the interesterified solid lipid component is of a plant origin, more preferably selected from the group comprising interesterified cocoa butter, interesterified shea fat, interesterified illipe fat, interesterified sal fat, interesterified kokum fat, interesterified mango fat and fractions thereof (for example, interesterified shea stearin, interesterified mango stearin), even more preferably interesterified cocoa butter or interesterified shea stearin, most preferably interesterified cocoa butter.

Preferably, said at least one fluid oil is a natural oil.

The term "natural oil" refers herein to an oil that has not undergone modification processes such as interesterification, hydrogenation or fractionation.

Preferably, the natural oil is extracted from a plant that is not the result of genetic engineering techniques aimed at modifying the content profile of fatty acids of the oil with respect to the original plant.

Preferably, said at least one fluid oil is a vegetable oil, more preferably selected from the group comprising rice oil, soya oil, sunflower oil, rapeseed oil, chia oil, flaxseed oil, corn oil, safflower oil, olive oil, canola oil, grapeseed oil, pumpkin oil, sesame oil, walnut oil, hazelnut oil and mixtures thereof, even more preferably selected from the group comprising rice oil, soya oil and mixtures thereof.

Preferably, the above fat phase has a melting point, defined and measured as described above, comprised between 22 and 50°C, more preferably comprised between 32 and 40°C, even more preferably comprised between 34 and 38°C, most preferably between 35 and 37°C.

Preferably, the aqueous phase comprises a plant extract, more preferably of cereals, legumes, seeds and/or fruit, preferably nuts.

Preferably, the vegetable extract is selected from the group comprising soya extract, rice extract, almond extract, hazelnut extract, quinoa extract, oat extract, kamut extract, coconut extract, hemp extract, corn extract, sunflower extract and mixtures thereof, more preferably selected from the group comprising rice extract, soya extract and mixtures thereof.

Preferably, the vegetable extract is present in the aqueous phase in a quantity, in dry weight percent based on the total weight of the aqueous phase, comprised between 1 and 50%, more preferably comprised between 5 and 20%.

Preferably, the spreadable food composition has a water content, in weight percent based on the total weight of the composition, comprised between 5% and 80%, more preferably comprised between 30 and 60%, even more preferably comprised between 40 and 50%.

Preferably, the at least one emulsifier is preferably selected from the group comprising mono- and/or diglycerides of fatty acids, lecithins, organic esters of mono- and/or diglycerides of fatty acids, polyglycerol esters, polyglycerol-polyricinoleate, sucrose esters and sucroglycerides, stearoyl-lactylates, 1-2 propanediol esters, sorbitan esters and mixtures thereof, more preferably a mixture of lecithins, monoglycerides and diglycerides of fatty acids, even more preferably a mixture of lecithins, monoglycerides and diglycerides of fatty acids from rapeseed and/or sunflower.

Preferably, the food composition comprises at least one additive selected from the group comprising preservatives, thickeners, stabilizers, colourings, antioxidants and nutraceutical ingredients.

Preferably, the colourings are selected from the group comprising carotenes, annatto and mixtures thereof, preferably carotenes.

Preferably, the antioxidants are tocopherols and/or natural extracts, for example from tea or oregano.

Preferably, the preservatives are selected from the group comprising sorbic acid, sorbates, benzoates and mixtures thereof, more preferably sorbates, even more preferably potassium sorbate.

Preferably, the thickeners and stabilizers are selected from the group comprising pectins, alginates, agar-agar, locust bean meal, carrageenans, gums (for example, tar, xanthan, gellan and guar), modified cellulose, starches (for example native starches, waxy starches, and modified starches), fibers, milk derivatives and mixtures thereof, more preferably selected from the group comprising pectins, alginates, carrageenans, locust bean meal and combinations thereof.

Preferably, the starches are selected from starches from corn, waxy corn, tapioca, rice, wheat, pea, potato, and combinations thereof.

Preferably, the modified starches are selected from the group comprising E 1404, E 1410, E 1412, E 1413, E 1414, E 1420, E 1422, E 1440, E 1442, E 1450, enzymatically modified starches and combinations thereof, more preferably selected from the group comprising E 1410, E 1412, E 1413, E 1414, E 1420, E 1422 and combinations thereof.

Preferably, the fibers are selected from the group comprising polysaccharides, oligosaccharides, beta-glucans, polydextrose, and combinations thereof, more preferably selected from the group comprising polysaccharides, oligosaccharides and combinations thereof.

Preferably, the nutraceutical ingredients are selected from the group comprising vitamins (for example, vitamin A, D and E, B and combinations thereof), prebiotics (for example, inulins and maltodextrins) and anticholesterolemic agents (for example, phytosterols and phytostanols) and combinations thereof.

Preferably, the food composition comprises at least one characterizing ingredient.

The term "characterizing ingredient" refers herein to an ingredient, different from the interesterified solid lipid component, the at least one fluid oil, the at least one emulsifier, the vegetable extract and the at least one additive, which confers a characterising flavour to the composition, such as for example aromas (natural and/or artificial), salt and acidifying agents (for example citric acid, lactic acid and their salts).

The above additives and characterizing ingredients can be present in the spreadable composition in variable quantities depending on the result to be obtained, preferably in a quantity of 20% or lower, more preferably lower than 5%, in dry weight based on the total weight of the spreadable food composition.

In a preferred embodiment, the spreadable food composition comprises from 5 to 15% of interesterified cocoa butter, from 35 to 45% of rice oil, and from 40 to 50% of rice extract.

In an alternative preferred embodiment, the spreadable food composition comprises from 5 to 15% of interesterified cocoa butter, from 35 to 45% of soya oil, and from 40 to 50% of soya extract.

The food composition is substantially free from hydrogenated fatty acids and preferably from trans fatty acids.

Preferably, the food composition is substantially free from palm and/or palm kernel fat.

Preferably, substantially all of the fats and oils of the food composition are of a plant origin.

The present invention also relates to a process as defined in claim 10.

Preferably, step a) comprises a mixing step of the at least one fluid oil and interesterified solid lipid component, wherein the interesterified solid lipid component is more preferably in the molten state.

Preferably, the interesterified solid lipid component of step a) is obtained by the interesterification a single fat, wherein said fat is said fat which has, in weight percent based on the total weight of the fat, at least 25% of stearic acid.

Preferably, in step a), said at least one fluid oil is a natural oil.

Preferably, in step a), the ratio between the interesterified solid lipid component and the at least one fluid oil is comprised between 1:2 and 1:8, more preferably comprised between 1:3 and 1:5.

Preferably, step a) comprises an addition step of at least one emulsifier.

Preferably, the emulsifier is added in a quantity of up to 10% by weight based on the total weight of the emulsion of step c).

Preferably, the at least one emulsifier is selected from the group comprising mono- and/or diglycerides of fatty acids, lecithins, organic esters of mono- and diglycerides of fatty acids, polyglycerol esters, polyglycerol-polyricinoleate, sucrose esters and sucroglycerides, stearoyl-lactylates, 1-2 propanediol esters, sorbitan esters and mixtures thereof, more preferably a mixture of lecithins, monoglycerides and diglycerides of fatty acids, even more preferably a mixture of lecithins, monoglycerides and diglycerides of fatty acids from rapeseed and/or sunflower.

If a spreadable food composition comprising additives and/or characterizing ingredients as described above is to be obtained, process steps a) and b) will comprise addition steps of said additives and/or characterizing ingredients. In particular, fat-soluble additives and/or characterizing ingredients are added in step a) whereas water soluble additives and/or characterizing ingredients are added in step b).

Preferably, the emulsification step c) is carried out by adding, more preferably slowly, the aqueous phase to the fat phase, optionally in the presence of at least one emulsifier, with stirring, more preferably continuously.

Preferably, step c) is carried out until an emulsion is formed, more preferably for at least 15 minutes, even more preferably for at least 20 minutes.

Preferably, step c) is preferably carried out at a temperature comprised between 50 and 70°C, more preferably comprised between 55 and 65°C.

Preferably, step c) is carried out in a container equipped with a stirrer, more preferably equipped with a booster pump and/or dynamic emulsification system, even more preferably in a processor.

Preferably, the container is equipped with a jacket on the surface, suitable for heating the inside of the container through air and/or steam circulation.

Preferably, in step c), the emulsion comprises, in weight percent based on the total weight of the emulsion, from 15 to 80%, more preferably from 37 to 60%, even more preferably from 43 to 55% of fat phase; from 15 to 80%, more preferably from 37 to 60%, even more preferably from 43 to 55% of aqueous phase; and from 0.05 to 5%, more preferably from 0.1 to 3%, even more preferably from 0.5 to 2% of at least one emulsifier.

Preferably, the crystallization step d) is carried out by cooling the emulsion, more preferably step d) comprises a first and a second cooling step.

Preferably, in step d), the emulsion leaving the first cooling step is at a higher temperature with respect to the emulsion leaving the second cooling step.

Preferably, in step d), the emulsion leaving the first cooling step has a temperature comprised between 20 and 35°C, more preferably comprised between 25 and 30°C; and the emulsion leaving the second cooling step has a temperature comprised between 5 and 15°C, more preferably comprised between 10 and 12°C.

Preferably, the crystallization step d) is carried out in a crystallizer by passing the emulsion obtained in step c) through one or more scraped surface heat exchangers, preferably arranged in series.

Preferably, the crystallizer comprises four scraped surface heat exchangers, of which a first pair carries out the first cooling step and is set at a temperature comprised between -15°C and -5°C, more preferably between -12°C and -8°C; and a second pair carries out the second cooling step and is set at a temperature comprised between -24°C and -14°C, more preferably between -19°C and -16°C.

Preferably, the crystallizer comprises six scraped surface heat exchangers, of which a first pair carries out a first cooling step and is set at a temperature comprised between -15°C and -5°C, more preferably between -12°C and -8°C; and the other carry out a second cooling step and are set at a temperature comprised between -24°C and -14°C, more preferably between -19°C and -16°C

Preferably, at the end of the crystallization step d), the emulsion is at a temperature of 35°C or lower, more preferably of 25°C or lower, even more preferably comprised between 8 and 14°C.

Following the crystallization step d), the emulsion thus obtained is advantageously in crystallized form in a conformation which is such that the preparation is glossy, homogeneous and with a sufficiently "soft" consistency, allowing the emulsion to uniformly fill the tub.

Preferably, the crystallization step d) is preceded by a heating step of the emulsion obtained in step c), preferably at a temperature comprised between 75 and 90°C, more preferably followed by a cooling step, preferably at a temperature comprised between 50 and 70°C, more preferably comprised between 55 and 65°C. It is within the skills of the skilled person in the field to modulate the temperatures and times of the above heating and cooling steps in relation to the features of the spreadable food composition to be obtained.

Preferably, the crystallization step is followed by a packaging step e) of the emulsion obtained, more preferably in tubs.

Preferably, the packaging step e) is followed by a further maturing step, more preferably at a temperature comprised between 3 and 10°C, more preferably comprised between 4 and 6°C, for a time of 120 hours or longer, more preferably of 240 hours or longer.

Preferably, the crystallization step d) is followed by a refinement step of the structure of the emulsion leaving step d), wherein the emulsion is subjected to mechanical stress, more preferably in a pin rotor.

Preferably, the pin rotor is driven at a rotation rate comprised between 10 and 1,500 revs per minute (rpm), more preferably comprised between 400 and 1,000 revs per minute, more preferably comprised between 600 and 800 revs per minute for a contact time with the product comprised between 60 and 180 seconds, more preferably comprised between 90 and 150 seconds.

Preferably, the emulsion leaving the refinement step is at a temperature comprised between 10 and 30°C, more preferably comprised between 16 and 20°C.

Preferably, step a) is preceded by an interesterification step of a fat comprising, in weight percent, at least 25% of stearic acid.

Preferably, the fat is selected from cocoa butter, shea fat, illipe fat, sal fat, kokum fat, mango fat and fractions thereof (for example, shea stearin, mango stearin), even more preferably cocoa butter or shea stearin, most preferably cocoa butter.

Preferably, the interesterification is enzymatic and/or chemical, preferably chemical.

Preferably, the interesterification is of the chemical type and comprises the addition of an alkaline catalyst, more preferably selected from the group of alcoholates, more preferably sodium methoxide.

Preferably, the interesterification step is carried out at a temperature comprised between 80 and 120°C, more preferably between 90 and 110°C.

Preferably, the interesterification step is carried out under vacuum.

The interesterification step advantageously effects a redistribution of the fatty acids, thus allowing a fat with optimal crystallization characteristics to be obtained, as explained above.

Preferably, the interesterification step is carried out until the interesterification has been completed, more preferably for a time comprised between 15 and 180 minutes, more preferably comprised between 30 and 150 minutes, even more preferably for a time comprised between 60 and 120 minutes.

The determination of the completion of the interesterification lies within the capacity of the skilled person in the field and can be determined, for example, by comparing the values for the flow point and SFC ("*solid fat content*") profile with a reference standard of the fat completely interesterified.

Preferably, the interesterification step is followed by a purification step of the interesterified solid lipid component ("hardstock") obtained, wherein undesired residues of the interesterification reaction, preferably catalyst and soap residues, are removed from the latter.

The determination of the concentrations of the various triglycerides can be carried out by means of techniques known in the field, such as, for example, by means of chromatographic analyses.

In particular, a first chromatographic analysis, according to techniques known to skilled person in the field, can be carried out on a sample of fat to be tested dividing the sample into four fractions wherein a first fraction contains the triglycerides POP, PPO and POO; a second fraction contains the triglycerides SOO, PPP, POS, PSO and SPO; a third fraction contains the triglycerides SOS and SSO; and a fourth fraction contains all the triglycerides not present in the above-mentioned fractions, from the first to the third. At the same time, the first chromatographic analysis provides the values of the concentrations of triglycerides in the fourth fraction.

With a second chromatographic analysis on each of the fractions, from the first to the third, according to techniques known to skilled person in the field, the concentration of the triglycerides present is determined for each of these.

A skilled person in the field is capable of determining the analysis parameters appropriate for the purpose.

A detailed description of the above determination is provided in Example 1.

The determination of the concentrations of fatty acids of a sample can be carried out by means of techniques known in the field, for example by means of gas chromatography according to the method described in ISO 5508:2012 ("*Animal and vegetable fats and oils. Analysis by gas chromatography of methyl esters of fatty acids*").

As mentioned above, a spreadable margarine must have particular plasticity and melting point characteristics in order to be suitable for its application. These plasticity characteristics are given by the crystallization characteristics of the margarine, which in turn depends on the composition of the margarine itself.

It has now been surprisingly found that by carrying out the interesterification of a fat comprising at least 25% of stearic acid, such as, for example, cocoa butter, a solid fat can be obtained, in a simple and reliable way, and also with much higher yields than alternative modification processes, which has, and which preserves in time, optimal crystallization, and therefore plasticity, characteristics, as hardstock for the production of spreadable food compositions, in particular spreadable margarine-like food compositions.

The food composition of the invention is in fact particularly stable and does not give rise, during its storage period, to the formation of granules (a phenomenon known as post-crystallization), which would give the composition a sandy appearance and texture.

Furthermore, if the interesterified fat is composed of a single fat, it has the advantage of having at the same time a higher melting point with respect to that obtained with methods common in the known art which include, for example, the interesterification of palm-derived fats with fluid vegetable oils. These methods of the known art, moreover, give rise to a greater variation in the result on the final food composition, in addition to requiring a more complex production process, and consequently the process of the present invention allows a greater repeatability of the plastic characteristics of the composition to be obtained with a simpler process.

The result obtained proves to be even more advantageous if one considers that, the content of fats being equal, the content of saturated fatty acids in the interesterified solid lipid component of the present invention is lower compared to that of a conventional hardstock comprising palm fat of the known art.

Thanks to the high content of stearic acid (C 18:0), the melting point is in fact higher, the content of saturated fatty acids being equal, compared to a hardstock having a larger proportion of fatty acids with a shorter chain, such as, for example, palmitic acid or lauric acid.

The fact of obtaining an interesterified solid lipid component (hardstock) with a high melting point is in turn an advantage, as it can be mixed, in the production of a spreadable food composition, in particular a margarine-like spreadable food composition, with a relatively high quantity of oils having a high content of unsaturated fatty acids. In this way, the spreadable food composition obtained starting from such interesterified solid lipid component will have a reduced absolute content of saturated fatty acids, and consequently also a particularly reduced overall ratio between saturated fatty acids and unsaturated fatty acids compared to analogous compositions of the prior art prepared starting from a conventional hardstock comprising palm oil or its derivatives of the known art.

It is known that saturated fats are associated with an increased risk of cardiovascular diseases, and it is consequently advantageous, the total fat content being equal, for the weight ratio between saturated fatty acids and unsaturated fatty acids to be as low as possible.

Furthermore, according to the most well-known scientific theories, unlike other saturated fatty acids, such as palmitic acid (C16:0), myristic acid (C14:0) and lauric acid (C12:0), which are associated with an increase in LDL cholesterol and therefore an increased risk of cardiovascular diseases, stearic acid (C18:0) is an exception, as it has been found to be neutral with respect to its association with the production of LDL cholesterol. It is therefore advantageous for the weight ratio between stearic acid and the sum of the remaining saturated fatty acids to be relatively high.

Thanks to the inclusion of an interesterified solid lipid component obtained from the interesterification of a fat comprising at least 25% of stearic acid, the food composition of the present invention therefore represents an optimal compromise between the need for obtaining the desired rheological characteristics in a relatively simple, reliable and repeatable way, and the necessity of obtaining a product as healthy as possible, i.e. with a saturated fat content as low as possible, wherein the ratio between stearic acid and the other saturated fatty acids is as high as possible.

### Brief description of the Figures

Figure 1 describes the steps of the process for the production of the spreadable composition of the invention according to a preferred embodiment.
Figure 2 is a graph showing the results of a rheological analysis for comparing the storage modulus values (G') and the loss modulus values (G") of the three margarines A, B and C.

### Detailed description of the invention

The invention is now further described with reference to embodiment examples provided for purely illustrative and non-limiting purposes.

### EXAMPLE 1

### Interesterification of cocoa butter

110 kg of cocoa butter were weighed and were introduced into a reactor provided with stirring means. The cocoa butter was then heated to 100°C with continuous stirring and under vacuum conditions.

Sodium methoxide was subsequently added in a catalytic quantity (0.1% w/w) to start the interesterification reaction, and the mixing was continued until the interesterification reaction had been completed, after about 90 minutes, identified by analysis of the SFC ("solid fat content") profile through pulsed NMR and by measuring the flow point. The reaction was considered as being terminated when the flow point and SFC profile coincided with a reference of totally interesterified cocoa butter.

The cocoa butter thus interesterified was then purified from residues of catalyst and soaps by means of a classical work-up procedure (mild acidification, rinsing, filtration with filtration adjuvants) well-known in the field.

The solid fat content (SFC) of the interesterified cocoa butter was then re-measured at temperatures of 10°C, 20°C, 25°C, 30°C and 35°C, by means of pulsed NMR, and its flow point was determined by capillary flow analysis. The flow point of a fat is the temperature at which the fat rises inside a capillary tube immersed in water, and it was measured according to the method NGD C 73-1989. Its triglyceride profile was also determined using the following method.

A first chromatographic analysis was carried out on the sample of fat dividing the sample into four fractions wherein a first fraction contained the triglycerides POP, PPO and POO; a second fraction contained the triglycerides SOO, PPP, POS, PSO and SPO; a third fraction contained the triglycerides SOS and SSO; and a fourth fraction contained all the triglycerides not present in the above-mentioned fractions, from the first to the third (P = palmitic acid; O = oleic acid; S = stearic acid; A = arachidic acid).

A Shimadzu HLPC system was used for the first analysis, with 4 solvent lines, a degasser, a self-sampler, LC solution software coupled with an ELSD Alltech 3300 detector and a collector for the fractions. N₂ was used as atomizing gas with a flow rate of 1.4 mL/min, atomization temperature = 38°C.

An Alltima HP C18 HL column was used (150 X 3.0 mm) with particles having a diameter of 3 µm (Grace Alltech, Lokeren, Belgium); a silica-packed pre-column (Grace Alltech, Columbia, MD) (7.5 x 3.0 mm) was used; and a solution (dichloromethane/acetonitrile % v/v) was used as mobile phase with a variable gradient but constant flow rate of 0.72 ml/min. The table below (Table A) describes the gradient of the mobile phase in relation to time.

**Table A. Gradient of the mobile phase in relation to time in the first step in determining the triglycerides in cocoa butter.**

| Time (min) | Dichloromethane (% v/v) | Acetonitrile (% v/v) |
|---|---|---|
| 0 | 30 | 70 |
| 25 | 51 | 49 |
| 26 | 70 | 30 |
| 27 | 70 | 30 |
| 28 | 30 | 70 |
| 33 | 30 | 70 |

Six injections were effected for each analysis in order to obtain sufficient quantities of fractions for the subsequent analyses. Each injection was of 40 µL. The temperature of the column was set at 20°C.

The first chromatographic analysis provided concentration values of triglycerides in the above-mentioned fourth fraction.

The concentration of triglycerides present in the above-mentioned fractions, from the first to the third, was determined with a second chromatographic analysis on each of the above-mentioned fractions using the same system adopted for the above-mentioned first analysis, with the difference that a ChromSpher column 5 Lipids (250 X 4.6 mm) (Varian, Middelburg, The Netherlands) was used; an ionic-exchange pre-column was used (10 X 3 mm) (Varian, Middelburg, The Netherlands); the mobile phase was Acetone/Heptane = 2/98 % v/v, the temperature of the column was set at 25°C; and the flow rate was set at 1.0 ml/min.

The determination of the concentrations of fatty acids was effected by means of gas chromatography according to the method described in ISO 5508:2012 ("*Animal and vegetable fats and oils. Analysis by gas chromatography of methyl esters of fatty acids*").

A sample of natural cocoa butter (i.e. not interesterified) was also subjected, as described above, to SFC and flow point measurements, for comparison.

The triglyceride profile was also determined for this sample together with its fatty acid profile.

The results obtained are indicated in Tables 1-3.

**Table 1. Solid fat content (SFC) values of cocoa butter and interesterified cocoa butter and the respective flow points.**

| | SFC 10 °C | SFC 20 °C | SFC 25 °C | SFC 30 °C | SFC 35 °C | Flow point °C |
|---|---|---|---|---|---|---|
| Cocoa butter | 88 | 56 | 28 | 4 | 0 | 27 |
| Interesterified cocoa butter | 71 | 66 | 56 | 45 | 33 | 49 |

On the basis of the data provided in Table 1, it can be observed that interesterified cocoa butter, which has a non-polymorphic crystallization, has a much higher flow point compared to cocoa butter as such, which, on the contrary, has a polymorphic crystallization. Said flow point of interesterified cocoa butter is in line with a conventional hardstock based on interesterified fat of palm origin and lauric fat (from coconut or palm kernel), which generally has a flow point of about 45°C.

Table 2 shows a comparison between the content of triglycerides of cocoa butter before and after interesterification.

**Table 2. Comparison between the content of triglycerides of cocoa butter before and after interesterification (P = palmitic acid; O = oleic acid; S = stearic acid; A = arachidic acid)**

| Triglyceride | Content (%) in cocoa butter before interesterification (in weight percent based on the total weight of the triglycerides) | Content (%) in interesterified cocoa butter (in weight percent based on the total weight of the triglycerides) |
|---|---|---|
| SSO | | 8.7 |
| SOO | 3 | 7.7 |
| PSS | | 7.1 |
| PSO | | 6.3 |
| POS | 39 | 6.3 |
| SPO | | 6.3 |
| POO | 3 | 5.6 |
| PPS | | 5.2 |
| SSS | | 4.9 |
| PPO | | 4.6 |
| SOS | 27 | 4.3 |
| OSO | | 3.9 |
| SPS | | 3.5 |
| OOO | | 3.4 |
| OPO | | 2.8 |
| PSP | | 2.6 |
| POP | 18 | 2.3 |
| SOA | | <0.5 |
| POA | | <0.5 |
| AOA | | <0.5 |
| OTHER¹ | ≤10 | <15 |
| 1. OTHER: these are non-symmetrical triglycerides, each present in a quantity lower than 2.3% | | |

Table 3 shows the percentage content of each fatty acid or group of fatty acids

**Table 3. Composition in fatty acids of cocoa butter**

| Fatty acid | Content (%) in weight percent based on the total weight of fatty acids | Content (%) in weight percent based on the total weight of fatty acids |
|---|---|---|
| Saturated fatty acids with less than 16 carbon atoms | <0.5 | <0,5 |
| C16 (palmitic?) | 26.6 | 26.6 |
| C18:0 | 36.5 | 36.5 |
| C18:1 | 32.5 | 32.5 |
| C18:2 | 3.2 | 3.2 |
| C18:3 | <0.5 | <0.5 |
| Saturated fatty acids with over 18 carbon atoms | 1.2 | 1.2 |

From Tables 2 and 3 it can be seen that the profile of triglycerides has changed considerably. Whereas natural cocoa butter has a small variety of triglycerides, cocoa butter has a higher number of combinations of fatty acids, giving rise to numerous different triglycerides.

It can also be noted that the number of symmetrical triglycerides passes from 84% to 12.9%, of which the number of those having the same fatty acids in the first and third position on the glycerol drops from 45% a 6.6%.

### EXAMPLE 2

### Preparation of the margarine

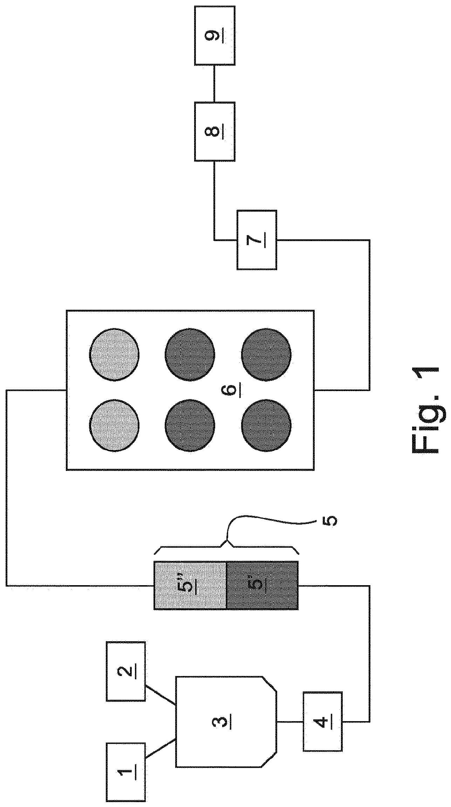

Three different formulations of margarine were prepared (A, B and C) having the formulation indicated in Table 4 according to the process described hereunder (see Figure 1). Margarine A represents a margarine obtained starting from a conventional hardstock based on palm stearin (iodine number of 20) and coconut oil in a weight ratio of 70:30 interesterified with each other.

Margarine B represents the spreadable food composition of the invention, obtained starting from interesterified cocoa butter obtained according to the method of Example 1.

Margarine C is obtained starting from cocoa butter as such.

**Table 4. Composition of margarines A, B and C**

| | A | B | C |
|---|---|---|---|
| **FAT PHASE** | | | |
| Fluid soya oil | 400 kg | 400 kg | 400 kg |
| Hardstock: interesterified palm stearin and coconut oil | 100 kg | | |
| Interesterified cocoa butter | | 100 kg | |
| cocoa butter | | | 100 kg |
| | | | |

| **EMULSIFIER** | | | |
|---|---|---|---|
| mono- and di-glycerides of fatty acids deriving from rape | 3.0 kg | 3.0 kg | 3.0 kg |
| mono- and di-glycerides of fatty acids deriving from sunflower | 5.0 kg | 5.0 kg | 5.0 kg |
| Sunflower lecithin | 2.0 kg | 2.0 kg | 2.0 kg |
| | | | |

| **AQUEOUS PHASE** | | | |
|---|---|---|---|
| Water | 484.6 kg | 484.6 kg | 484.6 kg |
| Salt | 4.0 kg | 4.0 kg | 4.0 kg |
| Potassium sorbate | 0.9 kg | 0.9 kg | 0.9 kg |
| Citric acid | 0.5 kg | 0.5 kg | 0.5 kg |
| **TOTAL** | **1000 Kg** | **1000 Kg** | **1000 Kg** |

In order to prepare each emulsifier preparation for each margarine A, B and C, 2 kg of sunflower lecithin, 3 kg of mono- and di-glycerides of fatty acids deriving from rape and 5 kg of mono- and di-glycerides of fatty acids deriving from sunflower, were introduced into heated containers equipped with stirrers and containing 120 kg of a molten mixture of soya oil and a fat selected from: (A) hardstock based on interesterified palm stearin and coconut oil; (B) interesterified cocoa butter; and (C) cocoa butter as such, for the margarines A, B and C respectively, in a weight ratio of 4:1 between oil and fat. Each mixture was heated to 70°C and kept under stirring at a rate of 30 rpm for the time necessary for dissolving all the components in the fat phase.

For the preparation of the fat phase (FG) of margarine A, the hardstock of palm stearin and coconut oil was melted and mixed with soya oil in a weight ratio between oil and hardstock of 4:1 with an overall weight of hardstock and soya oil of 380 kg, and with the emulsifier preparation described above (130 kg), in a heated container equipped with a stirrer (1), and the mixture was heated to 60°C. The mixture was maintained under these conditions for 15 minutes.

For the preparation of the fat phase (FG) of margarine B, the interesterified cocoa butter of Example 1 was melted and mixed with soya oil in a weight ratio between oil and interesterified cocoa butter of 4:1, with an overall weight of the interesterified cocoa butter and soya oil of 380 kg, and with the emulsifier preparation described above (130 kg), in a heated container equipped with a stirrer (1), and the mixture was heated to 60°C. The mixture was maintained under these conditions for 15 minutes.

For the preparation of the fat phase (FG) of margarine C, the cocoa butter as such and therefore not interesterified, of Example 1 was melted and mixed with soya oil in a weight ratio between oil and cocoa butter of 4:1, with an overall weight of the cocoa butter and soya oil of 380 kg, and with the emulsifier preparation described above (130 kg), in a heated container equipped with a stirrer (1), and the mixture was heated to 60°C. The mixture was maintained in these conditions for 15 minutes.

An aqueous phase was prepared, separately, for each margarine A, B and C. In order to prepare the aqueous phase (FA), the ingredients listed in Table 4 with reference to the aqueous phase (water, salt, potassium sorbate, citric acid) in the quantities indicated, were introduced and mixed in a heated container equipped with a stirrer (2), and the mixture was heated to 60°C and maintained under these conditions until all the components were dissolved in the aqueous medium.

In order to prepare each of the emulsions of margarines A, B and C, 510 kg of fat phase, premixed with the emulsifier preparation, as described above, were introduced into a container (3, called processor) equipped with a jacket system over the whole of its surface, for heating by means of hot water circulation with a capacity of 2,000 liters, equipped with a stirrer, booster pump and dynamic emulsification system, and the mixture was heated to 60°C. 490 kg of aqueous phase were then added, maintaining the stirring and recirculation, and the mixture was left under these conditions for 20 minutes.

The emulsion thus formed was finally pumped by means of a pump (4) through a plate heat exchanger (5), wherein the emulsion was heated to 80°C in an area 5' of the exchanger (5) with hot water, and then cooled to 55°C in an area 5" of the exchanger (5) with cold water. The emulsion thus treated was then passed into a crystallizer (6) consisting of six scraped surface heat exchangers arranged in series and set at 650 rpm for crystallization by cooling the emulsion. In particular, a pair of exchangers was set at a temperature of -10°C (first cooling step) whereas the last 4 exchangers were set at a temperature of -18°C (second cooling step).

The crystallized emulsion thus obtained was passed into a *pin rotor* (7) set at a rotation rate of 700 rpm for 110 seconds in order to obtain a product with the desired rheological characteristics.

Table 5 shows the values measured of the parameters for margarines A, B and C. These values are the temperatures of the emulsion leaving the two crystallization steps, the energy absorption of the motor of the *pin rotor* (Aₚᵢₙᵣₒₜₒᵣ), and the temperature of the emulsion leaving the *pin rotor.*

**Table 5. Values measured of the parameters relating to the crystallization and parameters relating to refinement in a pin rotor for margarines A, B and C**

| | A | B | C |
|---|---|---|---|
| Temperature at the outlet of the first crystallization step | 27-32 °C | 25-30 °C | 17-22 °C |
| Temperature at the outlet of the second crystallization step | 11-13 °C | 10-12 °C | 7-8 °C |
| Absorption of the motor of the *pin rotor* | 40-50 Å | 40-50 Å | 70-80 Å |
| Temperature of the emulsion at the outlet of the *pin rotor* | 18 °C | 18 °C | 12 °C |

As can be observed, the emulsions obtained at the outlet of the *pin rotor* had different temperature and texture characteristics.

The temperatures of the three margarines A, B and C at the outlet of the *pin rotor* are in fact linked to the absorption of the motor of the *pin rotor* which, in turn, is indicative of the crystallization and hardness characteristics of the three margarines.

The margarines A and B, at the outlet of the *pin rotor*, had a temperature of 18°C, whereas the margarine C had a temperature of 12°C. Margarine C, in fact, has a crystallization which requires lower temperatures for being structured. Once triggered, however, the crystallization is more difficult to control as, at the outlet of the *pin rotor*, it is harder and more viscous with respect to the formulas of margarines A and B (the absorption is greater, in fact), so much so that it cannot be packaged. Consequently, the *pin rotor*, for formula C coherently had a higher absorption of the motor as indicated in Table 5, which shows an absorption of 70-80 Å for formula C against 40-50 Å of formulas A and B.

Emulsions A and B were then packaged in a packaging area (8) in tubs following procedures well-known in the art. The margarines thus packaged were left at a controlled temperature of 5°C for 240 hours in a maturing area (9) to stabilize the crystallization.

Due to the impossibility of packaging the preparation of emulsion C, as explained above, the production process of margarine C was therefore repeated following the procedures described above, with the difference that the set temperatures of the pairs of exchangers of the two crystallization steps were set at -3°C and -4°C instead of -10°C and -18°C respectively. This led to obtaining values for the parameters of the flow leaving the crystallizer and the *pin rotor* indicated in Table 6.

**Table 6. Values measured of the parameters relating to the crystallization and parameters relating to the refinement in a pin rotor for margarine C**

| | C |
|---|---|
| Temperatures at the outlet of the first crystallization step | 25-30 °C |
| Temperature at the outlet of the second crystallization step | 10-12 °C |
| Absorption of the motor of the *pin rotor* | 40-50 Å |
| Temperature of the emulsion at the outlet of the *pin rotor* | 18 °C |

Thanks to the lower cooling in the crystallization step, outlet temperatures from the *pin rotor* in line with those of formulas A and B were also obtained for the formula of margarine C and consequently a lower viscosity and hardness with respect to the same formula obtained in the previous test. It was therefore also possible to package this formula, as for formulas A and B, with a subsequent maturing step, as described above.

### EXAMPLE 3

### Measurement of the SFC and flow point of the fat phases of margarines A, B and C

The preparation of the fat phases of the three margarines A, B and C as described in Example 2 was repeated. The solid fat content (SFC) of the fat phases was then measured, at temperature of 10°C, 20°C, 25°C, 30°C and 35°C, and their flow point was determined according to the procedures described above in Example 1.

The results obtained for the fat phases are shown in Table 7.

**Table 7 - Values of Solid Fat Content (SFC) of the fat phases of margarines A, B and C and the respective flow points.**

| | SFC 10 °C | SFC 20 °C | SFC 25 °C | SFC 30 °C | SFC 35 °C | Flow point |
|---|---|---|---|---|---|---|
| A | 15.5 | 10 | 8 | 5.5 | 3.5 | 35 |
| B | 14 | 8.5 | 6 | 5 | 3 | 35 |
| C | 11-14 | 3-6 | 1-2 | 0-1 | 0 | 24 |

The data of Table 7 indicate for the fat phases of margarines A and B a flatter trend with respect to that of the fat phase of margarine C which, at a temperature of 25-30°C already shows values of solids close to zero, in contrast with the fat phases of margarines A and B which, at the same temperatures, still have a considerable percentage of solids. This behaviour is reflected in the fact that the fat phase of margarine C has a lower resistance to high-temperatures compared to the fat phases of the other two margarines, and that it has the tendency to melt and therefore separate at room temperature. The fat phases of margarines A and B, on the contrary, have a greater tolerance of ambient temperatures, such as those encountered during the use of the same margarines at a meal.

### EXAMPLE 4

### Rheological tests

The three margarines A, B and C prepared as in Example 2, were subjected to a rheological test carried out with a HAAKE Theo Stress 6000 rheometer with plate geometry using an oscillatory method in strain sweep (or "deformation scanning") at a frequency of 1 Hz at a temperature of 5°C.

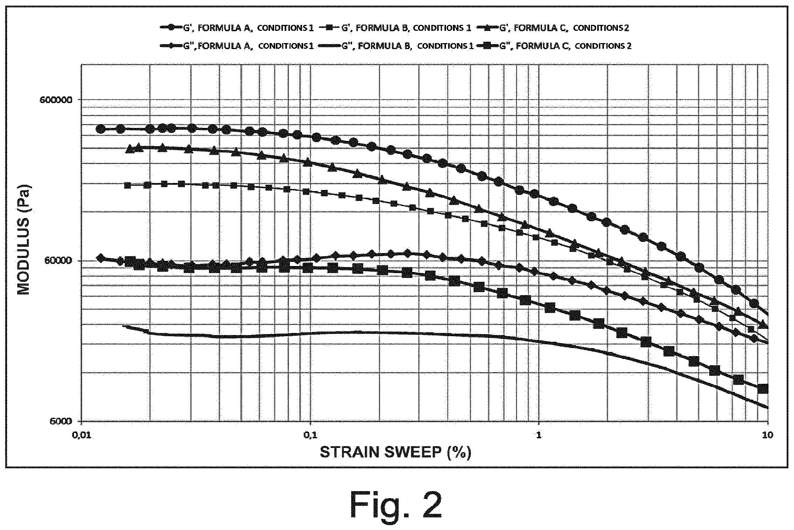

Figure 2 shows the results obtained for margarines A, B and C wherein G' and G" are the storage modulus and the loss modulus, respectively, which describe the structure, and therefore the spreadability, of the three margarines. Margarines A, B and C are indicated in the graph of Figure 2 as "Formula A", "Formula B" and "Formula C", respectively. "Conditions 1" refers to the method described in Example 2 with reference to margarines A and B, whereas "Conditions 2" refers to the method described in Example 2 for margarine C after ascertaining the impossibility of packaging the margarine according to the temperature parameters used for margarines A and B. This method differs from that used for margarines A and B for the fact that temperatures of the pairs of exchangers of the two crystallization steps were set at -3°C and -4°C instead of -10°C and -18°C, respectively.

It should be noted that the instrument is capable of distinguishing the three margarines A, B and C and that it detects a higher "texture" of margarine A with respect to margarine C and even more so with respect to margarine B. It can be noted, in fact, that the curves of modules G' and G" of margarine C are always comprised within the upper limits represented by the modules of margarine A and the lower limits represented by margarine B (with interesterified cocoa butter of the invention). The "shapes" of the curves obtained by margarines A and B, however, are more similar to each other than those of margarine C. It should be noted that the decreases in G' of margarines A and B in relation to the deformation have a very similar trend, unlike G' of margarine C which instead shows a more pronounced reduction with an increase in the deformation percentage. This behaviour is even more evident for the loss modulus curves (G") as it can be seen that the values of G" of margarine C are almost superimposable to those of G" of margarine A with low deformations, but closer to those of G" of margarine B with high deformations.

These different values and trends indicate that the margarine with interesterified cocoa butter (margarine B of the invention) is the softest of the three but proves to be the closest, in terms of behaviour during the application of mechanical stress, to conventional margarine obtained with a hardstock based on palm fat and coconut oil.

### EXAMPLE 5

### Spreadability and stability test

In order to test the spreadability and stability of the three margarines A, B and C of Example 2, the three formulations were tested after storage at 5 degrees for 240 hours (T=0) and for 13 weeks (T=13).

It was found that, while maintaining its own spreadability, the sample of margarine C shows, after 13 weeks, corresponding to a period of about one third of the shelf-life of the margarine, undesirable post-crystallization effects in the form of small crystalline nuclei which affect the product, making it sandy.

Margarines A and B, on the contrary, are very similar to each other and post-crystallization phenomena are not observed.

### EXAMPLE 6

Preparation of margarines with rice and soya extracts.

The preparation of margarine B according to Example 2 was repeated, with the difference that the aqueous phase included oil and rice extract (margarine D) or oil and soya extract (margarine E) according to the composition shown in Table 8.

**Table 8 Composition of margarines D and E**

| | D | E |
|---|---|---|
| **FAT PHASE** | | |
| Fluid rice oil | 400 kg | |
| Fluid soya oil | | 400 kg |
| Interesterified cocoa butter | 100 kg | 100 kg |
| | | |

| **EMULSIFIER** | | |
|---|---|---|
| mono- and di-glycerides of fatty acids deriving from rape | 3.0 kg | 3.0 kg |
| mono- di-glycerides of fatty acids deriving from sunflower | 5.0 kg | 5.0 kg |
| Sunflower lecithin | 2.0 kg | 2.0 kg |
| | | |

| **AQUEOUS PHASE** | | |
|---|---|---|
| Rice extract | 484.6 kg | |
| Soya extract | | 484.6 kg |
| Salt | 4.0 kg | 4.0 kg |
| Potassium sorbate | 0.9 kg | 0.9 kg |
| Citric acid | 0.5 kg | 0.5 kg |
| TOTAL | 1000 Kg | 1000 Kg |

The extracts of rice and soya were obtained by extraction with water of the rice and soya seeds according to methods known to skilled persons in the field.

The margarines thus obtained were subjected to spreadability and stability tests as described in Example 5. It was found that also the formulations with soya and rice extracts do not show post-crystallization phenomena. Both products, on the contrary, after 13 weeks of storage at 5°C, maintain the typical properties of table margarines: gloss and spreadability.

## Claims

1. Spreadable food composition comprising, in weight percent based on the total weight of the composition, up to 95% of a fat phase comprising an interesterified solid lipid component and at least one fluid oil wherein the weight ratio between said interesterified solid lipid component and said at least one fluid oil is comprised between 1:1 and 1:10; at least 5% of an aqueous phase; and from 0 to 10% of at least one emulsifier; wherein said interesterified solid lipid component is obtained by the interesterification of a fat that has, in weight percent based on the total weight of the fat, at least 25% of stearic acid; wherein said interesterified solid lipid component comprises, in weight percent based on the total weight of the interesterified solid lipid component, a content of 20% or lower, of symmetrical triglycerides; and wherein said spreadable food composition comprises, in weight percent based on the total weight of the spreadable food composition, from 5 to 15% of the interesterified solid lipid component;
wherein said food composition is substantially free from hydrogenated fatty acids.

2. Composition according to claim 1, comprising, in weight percent based on the total weight of said spreadable food composition, from 15 to 80%, preferably from 37 to 60%, more preferably from 43 to 55% of said fat phase; from 15 to 80%, preferably from 37 to 60%, more preferably from 43 to 55% of said aqueous phase; and from 0,05 to 5%, preferably from 0,1 to 3%, more preferably from 0,5 to 2% of said at least one emulsifier.

3. Composition according to claim 1 or 2, wherein in said fat phase, the weight ratio between said interesterified solid lipid component and said at least one fluid oil is comprised between 1:2 and 1:8, preferably between 1:3 and 1:5.

4. Composition according to any one of the previous claims, wherein said interesterified solid lipid component comprises, in weight percent based on the total weight of the interesterified solid lipid component, from 25 to 60%, preferably from 30 to 50%, more preferably from 30 to 45%, even more preferably from 32 to 38% of stearic acid.

5. Composition according to any one of the previous claims, wherein said interesterified solid lipid component has a weight ratio between saturated fatty acids and unsaturated fatty acids (mono- and polyunsaturated) comprised between 80:20 and 40:60, preferably comprised between 70:30 and 50:50.

6. Composition according to any one of the previous claims, wherein said interesterified solid lipid component is of plant origin, preferably chosen in the group comprising interesterified cocoa butter, interesterified shea fat, interesterified illipe fat, interesterified sal fat, interesterified kokum fat, interesterified mango fat and fractions thereof, more preferably interesterified cocoa butter or interesterified shea stearin.

7. Composition according to any one of the previous claims, wherein said at least one fluid oil is a plant oil, preferably chosen in the group comprising rice oil, soya oil, sunflower oil, rapeseed oil, chia oil, flaxseed oil, corn oil, safflower oil, olive oil, canola oil, grapeseed oil, pumpkin oil, sesame oil, walnut oil, hazelnut oil and mixtures thereof, more preferably chosen in the group comprising rice oil, soya oil and mixtures thereof.

8. Composition according to any one of the previous claims, wherein said aqueous phase comprises a plant extract, preferably of cereals, legumes, seeds and/or fruit, preferably nuts.

9. Composition according to any one of the previous claims, wherein said at least one emulsifier is chosen in the group comprising mono- and/or diglycerides of fatty acids, lecithins, organic esters of mono- and diglycerides of fatty acids, polyglycerol esters, polyglycerol-polyricinoleate, sucrose esters and sucroglycerides, stearoyl-lactylates, 1-2 propanediol esters, sorbitan esters and mixtures thereof, preferably a mixture of lecithins, monoglycerides and diglycerides of fatty acids, more preferably a mixture of lecithins, monoglycerides and diglycerides of fatty acids of sunflower and/or rapeseed origin.

10. Process for the production of a spreadable food composition according to claims 1 to 9 comprising the steps of:
a) preparing a fat phase comprising a interesterified solid lipid component and at least one fluid oil wherein the weight ratio between said interesterified solid lipid component and said at least one fluid oil is comprised between 1:1 and 1:10, wherein said interesterified solid lipid component is obtained by the interesterification of a fat that has, in weight percent based on the total weight of the fat, at least 25% of stearic acid; and wherein said interesterified solid lipid component comprises, in weight percent based on the total weight of the interesterified solid lipid component, a content of 20% or lower, of symmetrical triglycerides;
b) preparing an aqueous phase;
c) emulsifying said fat phase and said aqueous phase thus obtained thus forming an emulsion, wherein said emulsion comprises, in weight percent based on the total weight of the emulsion, from 5 to 95% of said fat phase and from 5 to 95% of said aqueous phase; and
d) subjecting the emulsion thus obtained to crystallization;
wherein said food composition is substantially free from hydrogenated fatty acids.

11. Process according to claim 10, wherein said interesterified solid lipid component of step a) is obtained by the intereresterification of a single fat, wherein said fat is said fat comprising, in weight percent based on the total weight of the fat, at least 25% of stearic acid.

12. Process according to claim 10 or 11, wherein step a) comprises a step of addition of at least one emulsifier.

13. Process according to any one of claims 10 to 12, wherein step d) of crystallization is carried out by cooling of said emulsion, preferably wherein step d) comprises a first and second stage of cooling.

## Patentansprüche

1. Streichfähige Lebensmittelzusammensetzung, umfassend einen auf das Gesamtgewicht bezogenen Gewichtsprozentsatz der Zusammensetzung von bis zu 95% einer Fettphase umfassend eine umgeesterte feste Lipidkomponente und wenigstens ein flüssiges Öl, wobei das Gewichtsverhältnis zwischen der umgeesterten festen Lipidkomponente und dem wenigstens einen flüssigen Öl zwischen 1:1 und 1:10, wenigstens 5% einer wässrigen Phase und von 0 bis 10% wenigstens eines Emulgators liegt; wobei die umgeesterte feste Lipidkomponente durch Umesterung eines Fettes erhalten wird, das einen auf das Gesamtgewicht an Fett bezogenen Gewichtsprozentsatz von wenigstens 25% Stearinsäure umfasst; wobei die umgeesterte feste Lipidkomponente einen auf das Gesamtgewicht der umgeesterten festen Lipidkomponente bezogenen Gehalt an symmetrischen Triglyceriden von 20% oder weniger aufweist; und wobei die streichfähige Lebensmittelzusammensetzung einen auf das Gesamtgewicht der streichfähigen Lebensmittelzusammensetzung bezogenen Gewichtsprozentsatz von 5 bis 15% der umgeesterten festen Lipidkomponente aufweist;
wobei die Lebensmittelzusammensetzung im Wesentlichen frei von hydrierten Fettsäuren ist.

2. Zusammensetzung nach Anspruch 1, umfassend einen auf das Gesamtgewicht der streichfähigen Lebensmittelzusammensetzung bezogenen Gewichtsprozentsatz von 15 bis 80%, vorzugsweise von 37 bis 60%, bevorzugter von 43 bis 55% der Fettphase; und von 15 bis 80%, vorzugsweise von 37 bis 60%, bevorzugter von 43 bis 55% der wässrigen Phase; und von 0,05 bis 5%, vorzugsweise von 0,1 bis 3%, bevorzugter von 0,5 bis 2% des wenigstens einen Emulgators umfasst.

3. Zusammensetzung nach Anspruch 1 oder 2, wobei in der Fettphase das Gewichtsverhältnis zwischen der umgeesterten festen Lipidkomponente und dem wenigstens einen flüssigen Öl zwischen 1:2 und 1:8, vorzugsweise zwischen 1:3 und 1:5 liegt.

4. Zusammensetzung nach einem der vorstehenden Ansprüche, wobei die umgeesterte feste Lipidkomponente einen auf das Gesamtgewicht der umgeesterten festen Lipidkomponente bezogenen Gewichtsprozentsatz von 25 bis 60%, vorzugsweise von 30 bis 50%, bevorzugter von 30 bis 45%, noch mehr bevorzugt von 32 bis 38% Stearinsäure umfasst.

5. Zusammensetzung nach einem der vorstehenden Ansprüche, wobei die umgeesterte feste Lipidkomponente ein Gewichtsverhältnis zwischen gesättigten Fettsäuren und (einfach und mehrfach) ungesättigten Fettsäuren zwischen 80:20 und 40:60, vorzugsweise zwischen 70:30 und 50:50 aufweist.

6. Zusammensetzung nach einem der vorstehenden Ansprüche, wobei die umgeesterte feste Lipidkomponente pflanzlichen Ursprungs ist, vorzugsweise ausgewählt aus der Gruppe umfassend umgeesterte Kakaobutter, Sheafett, umgeesterte Illipé-Butter, umgeesteres Salfett, umgeestertes Kokumfett, umgeestertes Mangofett und Fraktionen davon, bevorzugter umgeesterte Kakaobutter oder umgeestertes Sheastearin.

7. Zusammensetzung nach einem der vorstehenden Ansprüche, wobei das wenigstens eine flüssige Öl ein Pflanzenöl ist, vorzugsweise ausgewählt aus der Gruppe umfassend Reisöl, Sojaöl, Sonnenblumenöl, Chiaöl, Rapsöl, Leinsamenöl, Maisöl, Distelöl, Olivenöl, Canolaöl, Traubenkernöl, Kürbisöl, Sesamöl, Walnussöl, Haselnussöl und Gemische davon, bevorzugter ausgewählt aus der Gruppe umfassend Reisöl, Sojaöl und Gemische davon.

8. Zusammensetzung nach einem der vorstehenden Ansprüche, wobei die wässrige Phase Pflanzenauszüge umfasst, vorzugsweise von Getreidearten, Hülsenfrüchten, Samen und/oder Früchten, vorzugsweise Nüssen.

9. Zusammensetzung nach einem der vorstehenden Ansprüche, wobei der wenigstens eine Emulgator ausgewählt ist aus der Gruppe umfassend Mono- und/oder Diglyceride von Fettsäuren, Lecithine, organische Ester von Mono- und Diglyceride von Fettsäuren, Polyglycerinester, Polyglycerolpolyricinoleat, Zuckerester und Sucroglyceride, Stearoyllactylate, 1-2- Propandiolester, Sorbitanester und Gemische davon, vorzugsweise ein Gemisch aus Lecithinen, Mono- und Diglyceriden von Fettsäuren, bevorzugter ein Gemisch aus Lecithinen, Mono- und Diglyceriden von Fettsäuren von Sonnenblumen und/oder Rapssamen.

10. Verfahren zur Herstellung einer streichfähigen Lebensmittelzusammensetzung nach den Ansprüchen 1 bis 9, umfassend die Schritte:
a) Herstellen einer Fettphase, umfassend eine umgeesterte feste Lipidkomponente und wenigstens ein flüssiges Öl, wobei das Gewichtsverhältnis zwischen der umgeesterten festen Lipidkomponente und dem wenigstens einen flüssigen Öl zwischen 1:1 und 1:10 liegt, wobei die umgeesterte feste Lipidkomponente durch Umesterung eines Fettes erhalten wird, das einen auf das Gesamtgewicht an Fett bezogenen Gewichtsprozentsatz von wenigstens 25% Stearinsäure umfasst; und wobei die umgeesterte feste Lipidkomponente einen auf das Gesamtgewicht der umgeesterten festen Lipidkomponente bezogenen Gehalt an symmetrischen Triglyceriden von 20% oder weniger aufweist;
b) Herstellen einer wässrigen Phase;
c) Emulgieren der dadurch erhaltenen Fettphase und wässrigen Phase, wodurch eine Emulsion gebildet wird, wobei die Emulsion - in Gewichtsprozent bezogen auf das Gesamtgewicht der Emulsion - zwischen 5 und 95% der Fettphase und zwischen 5 und 95% der wässrigen Phase umfasst; und
d) Unterziehen der dadurch erhaltenen Emulsion einer Kristallisation;
wobei die Lebensmittelzusammensetzung im Wesentlichen frei von hydrierten Fettsäuren ist.

11. Verfahren nach Anspruch 10, wobei die umgeesterte feste Lipidkomponente aus Schritt a) durch Umesterung eines einzelnen Fettes erhalten wird, wobei das Fett das Fett ist, das - in Gewichtsprozent bezogen auf das Gesamtgewicht des Fettes - wenigstens 25% Stearinsäure umfasst.

12. Verfahren nach Anspruch 10 oder 11, wobei Schritt a) einen Schritt der Zugabe von wenigstens einem Emulgator umfasst.

13. Verfahren nach einem der Ansprüche 10 bis 12, wobei der Schritt d) der Kristallisation ausgeführt wird durch Abkühlen der Emulsion, wobei Schritt d) vorzugsweise einen ersten und zweiten Kühlschritt umfasst.

## Revendications

1. Composition alimentaire tartinable comprenant, en
pourcentage en poids sur la base du poids total de la composition, jusqu'à 95 % d'une phase grasse comprenant un composant lipidique solide interestérifié et au moins une huile fluide dans laquelle le rapport pondéral entre ledit composant lipidique solide interestérifié et ladite au moins une huile fluide est compris entre 1:1 et 1:10 ; au moins 5 % d'une phase aqueuse ; et de 0 à 10 % d'au moins un émulsifiant ; dans laquelle ledit composant lipidique solide interestérifié est obtenu par interestérification d'une graisse qui contient, en pourcentage en poids sur la base du poids total de la graisse, au moins 25 % d'acide stéarique ; dans laquelle ledit composant lipidique solide interestérifié comprend, en pourcentage en poids sur la base du poids total du composant lipidique solide interestérifié, une teneur inférieure ou égale à 20 % de triglycérides symétriques ; et dans laquelle ladite composition alimentaire tartinable comprend, en pourcentage en poids sur la base du poids total de la composition alimentaire tartinable, de 5 à 15 % du composant lipidique solide interestérifié;
où ladite composition alimentaire est substantiellement exempte d'acides gras hydrogénés.

2. Composition selon la revendication 1, comprenant, en pourcentage en poids sur la base du poids total de ladite composition alimentaire tartinable, de 15 à 80%, de préférence de 37 à 60 %, plus préférablement de 43 à 55 % de ladite phase grasse ; de 15 à 80%, de préférence de 37 à 60%, plus préférablement de 43 à 55% de ladite phase aqueuse ; et de 0,05 à 5 %, de préférence de 0,1 à 3 %, plus préférablement de 0,5 à 2 % dudit au moins un émulsifiant.

3. Composition selon la revendication 1 ou 2, dans laquelle, dans ladite phase grasse, le rapport pondéral entre ledit composant lipidique solide interestérifié et ladite au moins une huile fluide est compris entre 1:2 et 1:8, de préférence entre 1:3 et 1:5.

4. Composition selon l'une quelconque des revendications précédentes, dans laquelle ledit composant lipidique solide interestérifié comprend, en pourcentage en poids sur la base du poids total du composant lipidique solide interestérifié, de 25 à 60 %, de préférence de 30 à 50 %, plus préférablement de 30 à 45 %, encore plus préférablement de 32 à 38 % d'acide stéarique.

5. Composition selon l'une quelconque des revendications précédentes, dans laquelle ledit composant lipidique solide interestérifié présente un rapport pondéral entre les acides gras saturés et les acides gras insaturés (mono et polyinsaturés) compris entre 80:20 et 40:60, de préférence compris entre 70:30 et 50:50.

6. Composition selon l'une quelconque des revendications précédentes, dans laquelle ledit composant lipidique solide interestérifié est d'origine végétale, de préférence choisi dans le
groupe comprenant le beurre de cacao interestérifié, le beurre de karité interestérifié, le beurre d'illipé interestérifié, la graisse de sal interestérifiée, la graisse de kokum interestérifiée, la graisse de mangue interestérifiée et leurs fractions, plus préférablement le beurre de cacao interestérifié ou la stéarine de karité interestérifiée.

7. Composition selon l'une quelconque des revendications précédentes, dans laquelle ladite au moins une huile fluide est une huile végétale, choisie de préférence dans le groupe comprenant l'huile de riz, l'huile de soja, l'huile de tournesol, l'huile de colza, l'huile de Chia, l'huile de lin, l'huile de maïs, l'huile de carthame, l'huile d'olive, l'huile de canola, l'huile de pépins de raisin, l'huile de pépins de courge, l'huile de sésame, l'huile de noix, l'huile de noisette et leurs mélanges, et choisie plus préférablement dans le groupe comprenant l'huile de riz, l'huile de soja et leurs mélanges.

8. Composition selon l'une quelconque des revendications précédentes, dans laquelle ladite phase aqueuse comprend un extrait de plante, de préférence des céréales, des légumineuses, des graines et/ou des fruits, de préférence des noix.

9. Composition selon l'une quelconque des revendications précédentes, dans laquelle ledit au moins un émulsifiant est choisi dans le groupe comprenant les mono- et/ou les diglycérides d'acides gras, les lécithines, les esters organiques de mono- et de diglycérides d'acides gras, les esters de polyglycérol, le polyglycérol-polyricinoléate, les esters de saccharose et les sucroglycérides, les stéaroyl-lactylates, les esters de 1-2-propanediol, les esters de sorbitan et leurs mélanges, de préférence un mélange de lécithines, de monoglycérides et de diglycérides d'acides gras, plus préférablement un mélange de lécithines, de monoglycérides et de diglycérides d'acides gras de tournesol et/ou de colza.

10. Procédé de production d'une composition alimentaire tartinable, selon les revendications 1 à 9, comprenant les étapes consistant à:
a) préparer une phase grasse comprenant un composant lipidique solide interestérifié et au moins une huile fluide dans laquelle le rapport pondéral entre ledit composant lipidique solide interestérifié et ladite au moins une huile fluide est compris entre 1:1 et 1:10, dans laquelle ledit composant lipidique solide interestérifié est obtenu par interestérification d'une graisse qui contient, en pourcentage en poids sur la base du poids total de la graisse, au moins 25 % d'acide stéarique ; et dans laquelle ledit composant lipidique solide interestérifié comprend, en pourcentage en poids sur la base du poids total du composant lipidique solide interestérifié, une teneur inférieure ou égale à 20 % de triglycérides symétriques;
b) préparer une phase aqueuse;
c) émulsionner ladite phase grasse et ladite phase aqueuse ainsi obtenue en formant une émulsion, dans lequel ladite émulsion comprend, en pourcentage en poids sur la base du poids total de l'émulsion, de 5 à 95 % de ladite phase grasse et de 5 à 95 % de ladite phase aqueuse; et
d) soumettre l'émulsion ainsi obtenue à une cristallisation;
où ladite composition alimentaire est substantiellement exempte d'acides gras hydrogénés.

11. Procédé selon la revendication 10, dans lequel ledit composant lipidique solide interestérifié de l'étape a) est obtenu par interestérification d'une seule graisse, dans lequel ladite graisse comprend, en pourcentage en poids sur la base du poids total de la graisse, au moins 25 % d'acide stéarique.

12. Procédé selon la revendication 10 ou 11, dans lequel l'étape a) comprend une étape d'ajout d'au moins un émulsifiant.

13. Procédé selon l'une quelconque des revendications 10 à 12, dans lequel l'étape d) de cristallisation est réalisée par refroidissement de ladite émulsion, de préférence dans lequel l'étape d) comprend une première et une deuxième étape de refroidissement.
